# EUROPEAN PATENT SPECIFICATION

(11) **EP 4 168 719 B1**
(45) Date of publication and mention of the grant of the patent: **25.09.2024**
(21) Application number: 21759149.4
(22) Date of filing: 02.08.2021
(51) Int. Cl.: F24F 13/24, G10K 11/172, F24F 13/02

(54) **VENTILATION UNIT WITH HIGH SOUND ABSORPTION AND THERMAL INSULATION PERFORMANCE**
LÜFTUNGSGERÄT MIT HOHER SCHALLABSORPTIONS- UND WÄRMEDÄMMLEISTUNG
UNITÉ DE VENTILATION À HAUTE PERFORMANCE D'ABSORPTION ACOUSTIQUE ET D'ISOLATION THERMIQUE

(30) Priority: 31.07.2020 IT 202000018919
(43) Date of publication of application: 26.04.2023
(73) Proprietor: Nutini, Sandro, 20100 Milan (IT); Morganti, Nicola Antonio, 2006 Mediglia (MI) (IT)
(72) Inventor: Nutini, Sandro, 20100 Milan (IT); Morganti, Nicola Antonio, 2006 Mediglia (MI) (IT)
(74) Representative: Sach, Greg Robert
(86) International application number: PCT/IB2021/057042
(87) International publication number: WO 2022/024098

(56) References cited:
- EP-A1- 3 623 714
- WO-A1-2008/106526
- WO-A1-2014/006650
- US-A- 4 260 037

## Description

### FIELD OF THE INVENTION

The present invention relates to a ventilation unit with high sound absorption and thermal insulation performance.

### BACKGROUND

Ventilation units with heat recovery are known which function as heat exchangers by means of a first line or first branch which supplies fresh air from the outside and a second line or second branch which expels stale air coming from the inside towards the outside.

According to a first embodiment of the prior art, these units provide partition walls or partitions made of flat metal sheets, for example of aluminum, which are therefore not efficient from an aerodynamic point of view. In fact, the sheets do not allow for a constancy of the section and thus for a constant speed through the section (m/s), with consequent maintenance of the energy after deduction of the distributed pressure drop.

In a second embodiment of the prior art, the metal sheet separations are not arranged in line.

In the prior art there are no real "modules" assembled as one-off pieces, but separating elements of metal sheet.

It can be seen that a solution which does not have metal sheet separations arranged in line forces the airflow to undesired direction changes with consequent pressure drops. Speed variations within the passage section vary the distribution of speeds in the section and therefore the energy is partly dissipated by friction.

Furthermore, the prior art units often have problems of deformation of the horizontal panels.

In fact, these units are very large due to aeraulic dimensioning and are therefore subjected to high stresses due to their own weight. Known units typically have considerable height to minimize deflection. Most of the sheets are arranged horizontally. The realization of the units in metal sheet panels (sandwich) require an oversizing (of their own weight) and design constraints (sheet partitions) to contain the deformations due to gravity.

Document WO 2014/006650 discloses an indoor unit formed by providing air blowers on the upstream side of heat exchangers and comprises partition plates for separating each set composed of both an air blower and a heat exchanger from each other to form an air flow passage for the air blower. The indoor unit has either a sound absorption material and/or a sound deadening body provided between the bell mouths of the air blowers and the wall surfaces of spaces formed by a housing and the partition plates.

A further drawback of the ventilation unit according to the prior art is given by the assembly which is generally completely manual.

The choice of material and configuration in fact require a reduced use of automation, which implies a reduced applicability of assembly robots.

Furthermore, it is worth noting a high weight for acoustically and thermally performing units, aimed at obtaining acoustic and thermal insulation.

A further drawback is given by the fact that the high weight means that known ventilation units are often difficult to assemble, if not with progressive assembly operations, which lead to high installation times and the use of more people than necessary.

The purpose of the present invention is therefore to provide a ventilation unit with heat recovery which allows to obtain high sound absorption and thermal insulation performance.

Another purpose of the invention is that of realizing a ventilation unit that offers high performance in terms of sanitizing the environments.

A further purpose of the invention is to achieve the above in a simple and economical way.

Other advantages of the invention will become apparent from the following description.

### BRIEF SUMMARY OF THE INVENTION

These purposes are achieved by a ventilation unit as defined in claim 1. Preferred embodiments of the invention are defined in the dependent claims.

An advantage of the invention is given by the fact that it allows to overcome the aforementioned problems relating to the use, in the prior art, of metal panels, for example in galvanized metal sheet or also in printed materials, which are not optimized to obtain simultaneously high sound absorption and thermal insulation performance.

Thanks to the invention, in fact, a combination of materials is obtained which allows maximum sound absorption and thermal insulation.

Further characteristics of the invention can be deduced from the dependent claims.

### BRIEF DESCRIPTION OF THE DRAWINGS

The advantages of the invention are evident from an examination of the figures illustrated in the attached tables, where:
figure 1 shows an axonometric view of a ventilation unit with high sound absorption and thermal insulation, according to an embodiment of the present invention;
figure 2 is a section of the ventilation unit of Figure 1, along a longitudinal piane;
figures 3-5 show details of figure 2;
figure 6 is a further section of the ventilation unit of figure 1, along a longitudinal piane;
figure 7 is an axonometric view of a subtractive module far high frequencies of the ventilation unit of the invention;
figure 8 is an exploded view showing details of the subtractive module of figure 7;
figure 9 is an exploded detail view of the subtractive module of figure 7;
figure 10 is an axonometric view of a pair of sound absorbing septa according to an embodiment of the present invention;
figure 11 shows various views of the sound absorbing septa of Figure 10; and
figure 12 shows a sanitizing system applied to the ventilation unit of the invention.

### DETAILED DESCRIPTION OF THE INVENTION

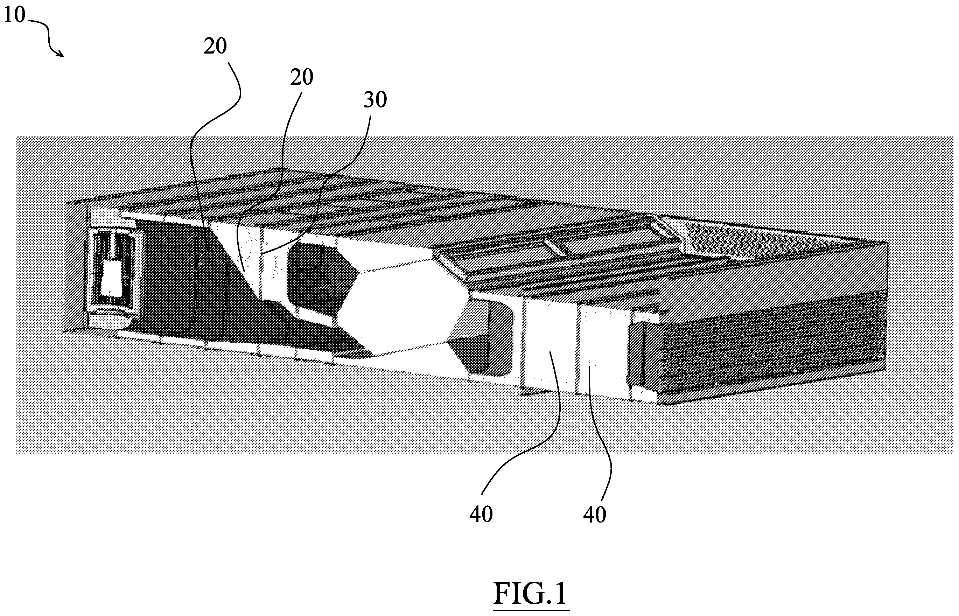

With reference to figure 1, there is an axonometric view of a ventilation unit with high sound absorption and thermal insulation performance, according to an embodiment of the present invention, globally indicated with the reference numeral 10.

The ventilation unit 10 comprises a heat exchanger capable of operating by means of a first line which supplies fresh air from the outside and a second line which expels hot air coming from the inside towards the outside.

In order, first of all, to reduce the noise emission of this heat exchanger, according to the invention the ventilation unit 10 is made by means of a modular structure. This modular structure includes a plurality of areas aimed at reducing high and low sound frequencies.

Furthermore, the modular structure comprises a plurality of modules indicated by way of example with the reference number 20 in figure 1, the aforementioned modules 20 being separated from each other by metal partitions 30.

In a variant, a sealing material of various kinds can be interposed between module and module.

The modules 20 can also be coated with metallic insulating material 40 to optimize noise reduction.

The modular structure 10 has numerous advantages.

In the first place, said structure can be assembled very quickly even using semiautomatic or even robotic systems.

Secondly, the modular structure 10 configures a self-supporting system which does not require reinforcement panels.

The metal partitions 30 can also function effectively as low frequency absorbers, giving each individuai module its own specific contribution to the reduction of said low sound frequencies.

The realization of the metal partitions 30 can be advantageously carried out by precisely cutting them using suitable cutting jigs.

The metal partitions 30 can be used advantageously for the precise cutting of the modules 20.

In arder to avoid thermal bridges, it is planned to be able to remove part of the partition before its gluing.

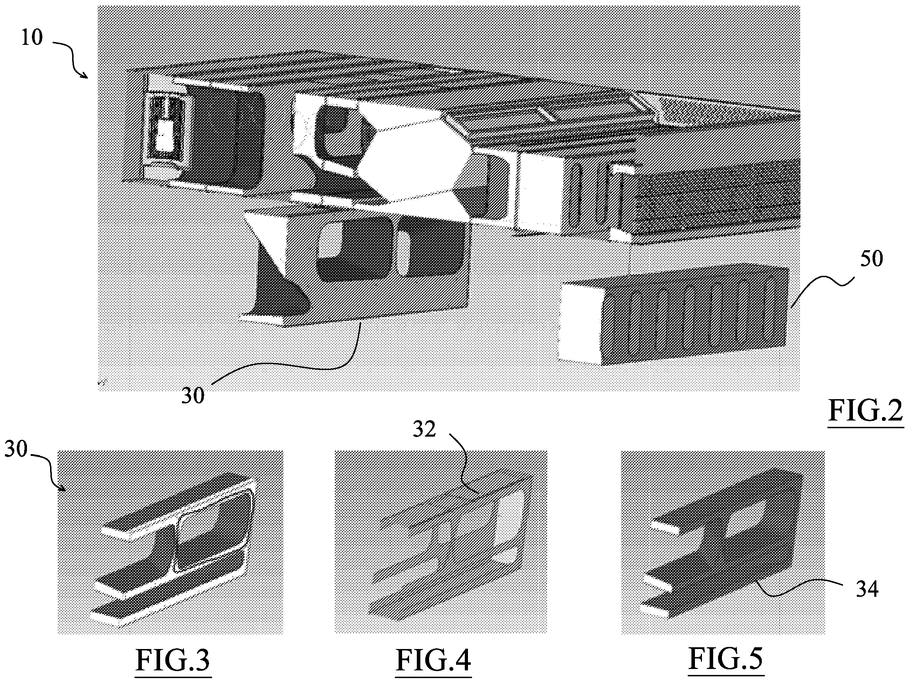

Figure 2 is a section of the ventilation unit 10 of figure 1, along a longitudinal piane, from which partitions 30 and 50 are shown, better described below.

Figures 3-5 show details of figure 2, and in particular figure 3 shows a metal partition 30, in turn composed of a metal frame 32 (figure 4) and a frame made of insulating material 34, said metal partition therefore being configured to function effectively as low frequency absorbers (figure 5).

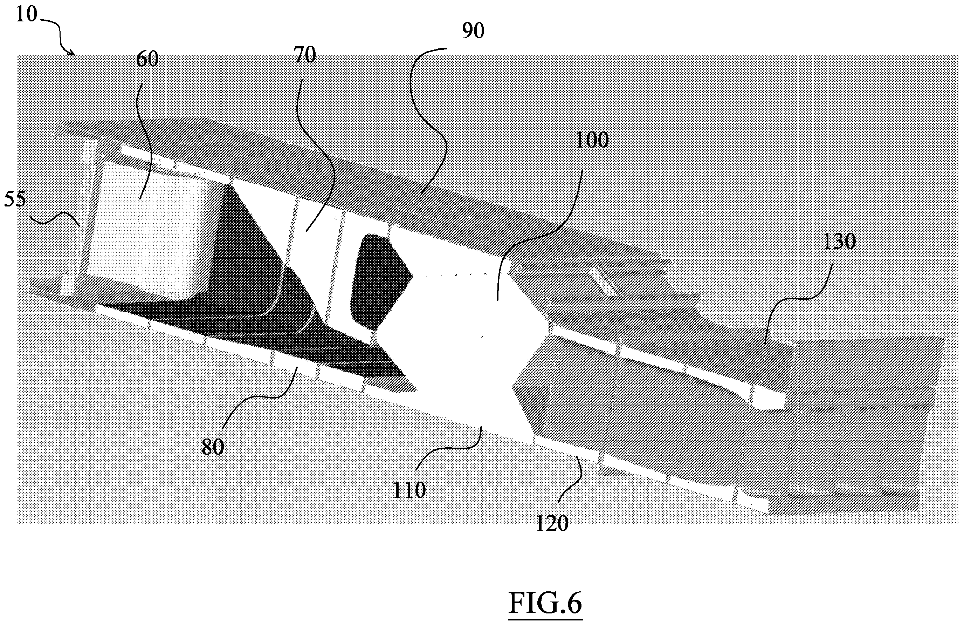

Figure 6 shows a further section of the ventilation unit 10, from which figure 6 shows the different areas of abatement of high and low sound frequencies.

In particular, proceeding from left to right of figure 6, there is first of all a low frequency abatement area 55, a cochlea 60 and a further low frequency abatement area 70 which comprises a plurality of Helmholtz resonators.

A gasket plate 90 is provided between each of the modules. The thickness 80 of each module is calculated as a function of the residual frequencies.

Figure 6 also shows a heat exchanger 100, moulded blocks of non-rotting materiai 110, as well as further areas for reducing sound frequencies.

In particular, a section 120 of the modular structure 10 is made by means of additive manufacturing technologies, and a section 130 intended far the abatement of high frequencies is made by means of subtractive manufacturing technologies.

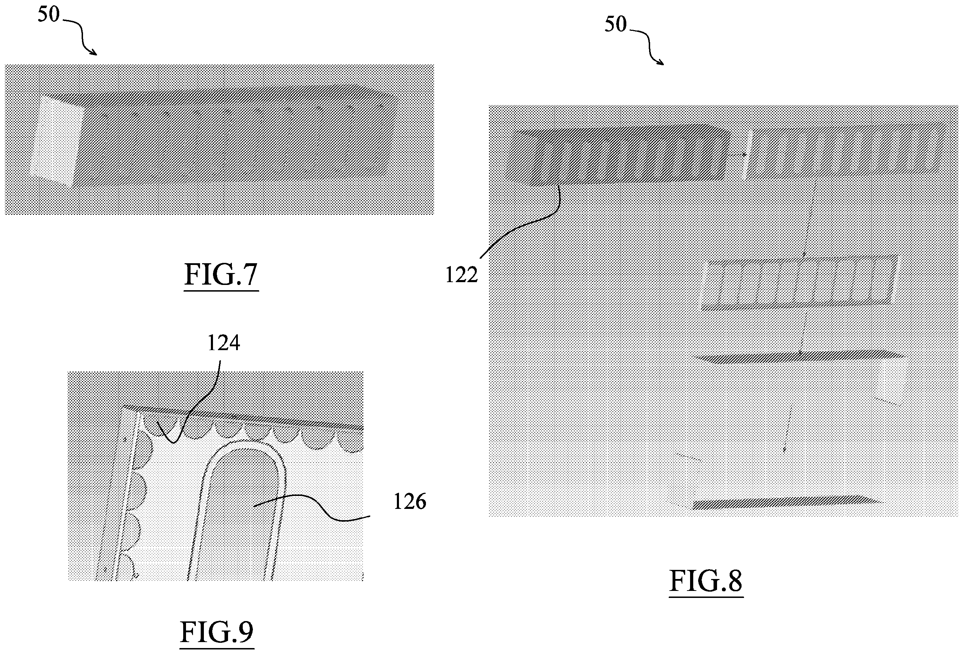

Figure 7 is an isometrie view of a fully assembled subtractive module far high frequencies of the ventilation unit of the invention.

Figure 8 is an exploded view showing details of the subtractive module of Figure 7.

In particular, a polyurethane component 122 is visible which has a plurality of shaped holes.

In the detail of figure 9, the technology that allows the reduction and cancellation of the thermal bridge is highlighted, where in particular it is possible to "calibrate" the soundproofing power of the metal partition 30 at the appropriate frequencies and where in particular a template ring is used far subtractive processing, after which it is eliminated in order arder to avoid thermal bridges during operation.

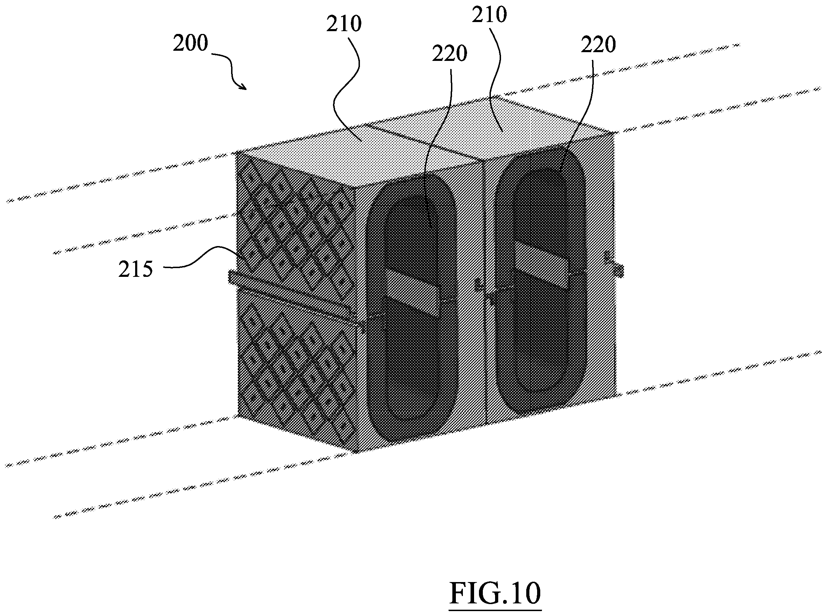

Figure 10 is an isometric view of a pair of sound absorbing septa 200 according to an embodiment of the present invention.

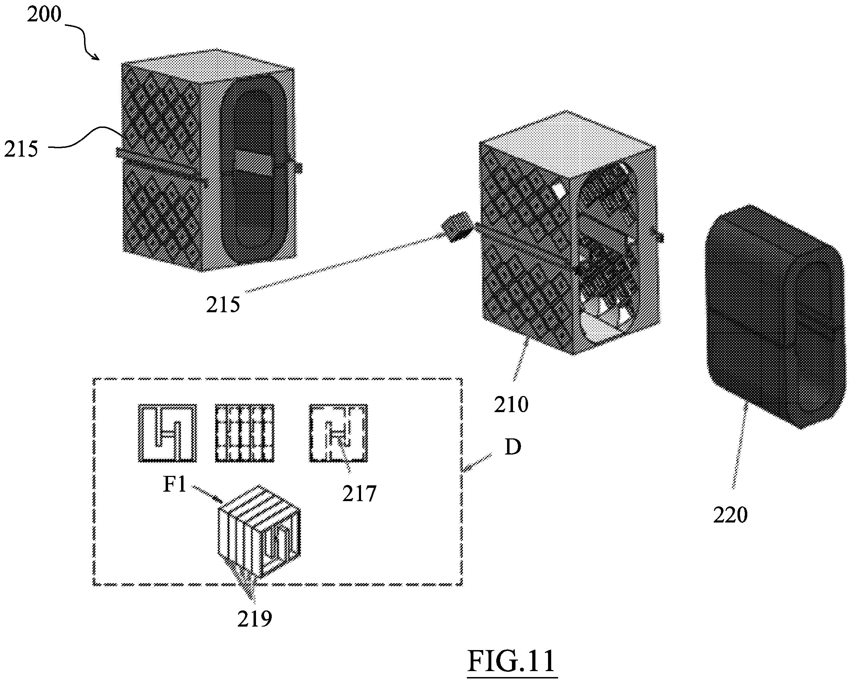

Figure 11 illustrates various views of the sound absorbing septa 200 of figure 10. Each of the sound absorbing septa 200 consists of an outer casing 210 made of plastic obtained by means of additive manufacturing techniques.

The term additive manufacturing techniques refers to the known three-dimensional printing techniques.

Inside each of the outer casings 210, there is a covering body 220 made of open cell sound absorbing materiai, used to absorb high frequencies, where said materiai is obtained by subtractive production.

The structure 210 is, in turn, obtained by means of a plurality of components 215, each of which is provided with a silencing channel 217 used far low frequencies and based on the principle of Helmholtz resonators.

These silencing channels 217 are directly obtained by additive manufacturing.

In detail D of figure 11, the direction of the sound wave entering the channel 217 present in each component 215 and trapping the low frequencies is visible according to the arrow F1.

The component 215 is also formed by a plurality of resonant microcasses 219 which absorb low frequencies.

Furthermore, the ventilation unit 10 can be equipped with an Active Noise Cancellation (ANC) system in order to have a greater reduction of noise with the same other characteristics.

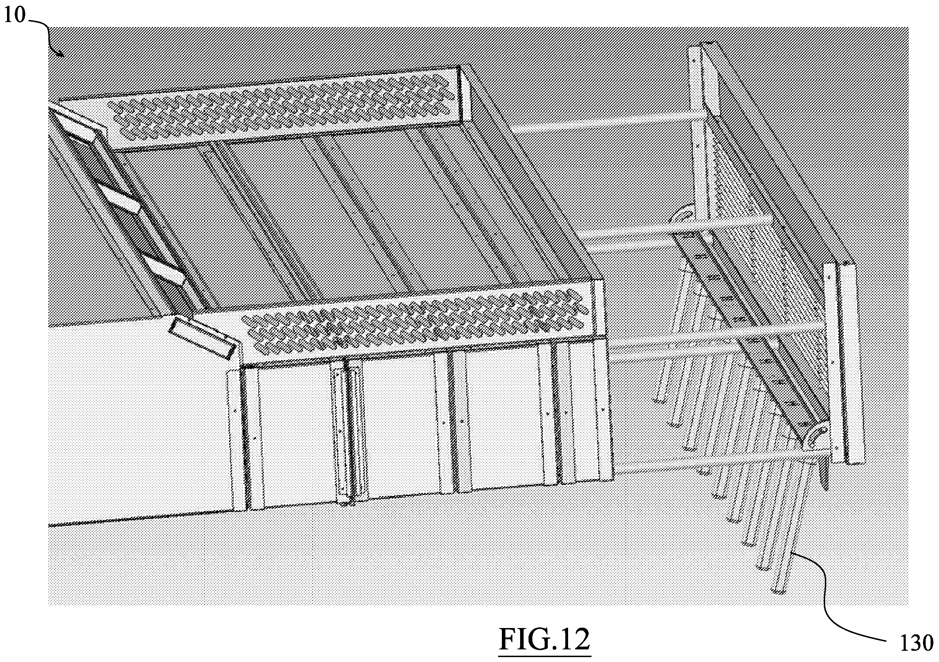

Figure 12 shows a sanitizing system applied to the ventilation unit 10 of the invention.

The ventilation unit of the invention may also comprise an integrated and aeraulically optimized sanitizing system, consisting of a plurality of UV lamps 130 which can be extracted by means of a motor.

The ventilation unit 10 may also comprise an optimized plenum to reduce the noise emissions of the return flow.

Amendments or improvements may be made to the invention as described, without thereby departing from the scope of the invention as defined in the appended claims.

## Claims

1. A ventilation unit (10) with high sound absorption and thermal insulation performance, the ventilation unit (10) comprising a heat exchanger (100), the noise emission of which said ventilation unit (10) is designed to abate, the ventilation unit (10) being made as a self-supporting structure with a plurality of modules (20), wherein the modular structure includes a plurality of areas configured for the abatement of high and low sound frequencies, the low frequency abatement areas comprising a plurality of Helmholtz resonators, wherein the modular structure comprises a section configured for the abatement of high and low frequencies and a section configured for the abatement of high frequencies, **characterized in that** the modules (20) of the modular structure are separated from each other by metal partitions (30) which are respectively composed of a metal frame (32) and a frame in insulating material (34) and configured to act effectively as absorbers of low frequencies, and **in that** the modules (20) are coated with metallic insulating material (40) so to optimize noise reduction.

2. The ventilation unit (10) as in claim 1, wherein a first portion of the modular structure comprises a low frequency abatement area (55), a cochlea (60) and a further low frequency abatement area (70) which includes a plurality of Helmholtz resonators.

3. The ventilation unit (10) as in claim 1, wherein the high and low frequency abatement area is achieved by additive manufacturing technologies and comprises a plurality of sound absorbing septa (200), each of the sound absorbing septa (200) comprising an outer casing (210) made of plastic obtained through additive manufacturing techniques, and wherein inside the outer casing (210) there is a casing (220) made of open cell sound-absorbing material, adapted used to absorb high frequencies.

4. The ventilation unit (10) as in claim 3, wherein the outer casing (210) is obtained by means of a plurality of components (215), each of the components (215) being provided with a silencing channel (217) adapted for low frequencies and based on the Helmholtz resonator principle.

5. The ventilation unit (10) as in claim 4, wherein each of the components (215) of the outer casing (210) comprises a plurality of resonant micro-cases (219) adapted for the absorption of low frequencies.

6. The ventilation unit (10) as in claim 1, wherein the ventilation unit (10) is further equipped with a sanitizing system configured for being integrated and aeraulically optimised, consisting of a plurality of UV lamps (130) which can be extracted by means of a motor.

7. The ventilation unit (10) as in claim 1, wherein the ventilation unit (10) is equipped with an Active Noise Cancellation (ANC) system.

## Patentansprüche

1. Lüftungseinheit (10) mit hoher Schalldämmung und Wärmedämmleistung, wobei die Lüftungseinheit (10) einen Wärmetauscher (100) umfasst, dessen Lärmemission die genannte Lüftungseinheit (10) zu mindern ausgelegt ist, wobei die Lüftungseinheit (10) als selbsttragende Struktur mit einer Vielzahl von Modulen (20) ausgeführt ist, wobei die modulare Struktur eine Vielzahl von Bereichen zur Minderung von hohen und niedrigen Schallfrequenzen umfasst, wobei die Bereiche zur Minderung von niedrigen Frequenzen eine Vielzahl von Helmholtz-Resonatoren umfassen, wobei die modulare Struktur einen Abschnitt zur Minderung von hohen und niedrigen Frequenzen und einen Abschnitt zur Minderung von hohen Frequenzen umfasst, **dadurch gekennzeichnet, dass** die Module (20) der modularen Struktur durch Metalltrennwände (30) voneinander getrennt sind, die jeweils aus einem Metallrahmen (32) und einem Rahmen aus Dämmmaterial (34) bestehen und so konfiguriert sind, dass sie effektiv als Absorber für niedrige Frequenzen wirken, und dass die Module (20) mit metallischem Dämmmaterial (40) beschichtet sind, um die Lärmreduzierung zu optimieren.

2. Die Lüftungseinheit (10) nach Anspruch 1, wobei ein erster Abschnitt der modularen Struktur einen Bereich zur Minderung von niedrigen Frequenzen (55), eine Schnecke (60) und einen weiteren Bereich zur Minderung von niedrigen Frequenzen (70) umfasst, der eine Vielzahl von Helmholtz-Resonatoren enthält.

3. Die Lüftungseinheit (10) nach Anspruch 1, wobei der Bereich zur Minderung von hohen und niedrigen Frequenzen mittels additiver Fertigungstechnologien hergestellt ist und eine Vielzahl von schallabsorbierenden Septen (200) umfasst, wobei jedes der schallabsorbierenden Septen (200) ein äußeres Gehäuse (210) aus Kunststoff umfasst, das durch additive Fertigungstechniken hergestellt ist, und wobei sich innerhalb des äußeren Gehäuses (210) ein Gehäuse (220) aus offenporigem schallabsorbierendem Material befindet, das zur Absorption von hohen Frequenzen geeignet ist.

4. Die Lüftungseinheit (10) nach Anspruch 3, wobei das äußere Gehäuse (210) durch eine Vielzahl von Komponenten (215) gebildet ist, wobei jede der Komponenten (215) mit einem Schalldämpfungskanal (217) ausgestattet ist, der für niedrige Frequenzen ausgelegt ist und auf dem Prinzip des Helmholtz-Resonators basiert.

5. Die Lüftungseinheit (10) nach Anspruch 4, wobei jede der Komponenten (215) des äußeren Gehäuses (210) eine Vielzahl von resonanten Mikrokammern (219) umfasst, die zur Absorption von niedrigen Frequenzen geeignet sind.

6. Die Lüftungseinheit (10) nach Anspruch 1, wobei die Lüftungseinheit (10) ferner mit einem Desinfektionssystem ausgestattet ist, das so konfiguriert ist, dass es integriert und aerodynamisch optimiert werden kann, und das aus einer Vielzahl von UV-Lampen (130) besteht, die mittels eines Motors entnommen werden können.

7. Die Lüftungseinheit (10) nach Anspruch 1, wobei die Lüftungseinheit (10) mit einem System zur aktiven Geräuschunterdrückung (Active Noise Cancellation, ANC) ausgestattet ist.

## Revendications

1. Unité de ventilation (10) à performances élevées d'absorption acoustique et d'isolation thermique, l'unité de ventilation (10) comprenant un échangeur de chaleur (100), l'émission sonore dudit unité de ventilation (10) est conçue pour réduire, l'unité de ventilation (10) étant constitué sous la forme d'une structure autoporteuse avec une pluralité de modules (20) où la structure modulaire comprend une pluralité de zones configurées pour la réduction des hautes et basses fréquences sonores, les zones de réduction des basses fréquences comprenant une pluralité de modules de résonateurs Helmholtz, dans lesquels la structure modulaire comprend une section pour la réduction des hautes et basses fréquences et une section configurée pour la réduction des hautes fréquences, **caractérisée en ce que** les modules (20) de la structure modulaire sont séparés les uns des autres par des cloisons métalliques (30) qui sont respectivement composées d'un cadre métallique (32) et d'un cadre en matériau isolant (34) et configurées pour agir efficacement comme absorbeurs de basses fréquences, et **en ce que** les modules (20) sont revêtus avec un matériau isolant métallique (40) afin d'optimiser la réduction du bruit.

2. L'unité de ventilation (10) selon la revendication 1, où une première partie de la structure modulaire comprend une zone de réduction des basses fréquences (55), une cochlée (60) et une autre zone de réduction des basses fréquences (70) qui comprend une pluralité de résonateurs Helmholtz.

3. L'unité de ventilation (10) selon la revendication 1, où la zone de réduction des hautes et basses fréquences est réalisée par des technologies de fabrication additive et comprend une pluralité de septums insonorisants (200), chacun des septums insonorisants (200) comprenant un boîtier extérieur (210) en plastique obtenu par des techniques de fabrication additive, et où, à l'intérieur du boîtier extérieur (210) se trouve un boîtier (220) constitué d'un matériau insonorisant à cellules ouvertes, adapté pour absorber les hautes fréquences.

4. L'unité de ventilation (10) selon la revendication 3, où le boîtier extérieur (210) est obtenu au moyen d'une pluralité de composants (215), chacun des composants (215) étant pourvu d'un canal silencieux (217) adapté pour les basses fréquences et basé sur le principe du résonateur Helmholtz.

5. L'unité de ventilation (10) selon la revendication 4, où chacun des composants (215) du boîtier extérieur (210) comprend une pluralité de micro-boîtiers résonants (219) adaptés pour l'absorption des basses fréquences.

6. L'unité de ventilation (10) selon la revendication 1, où l'unité de ventilation (10) est en outre équipée d'un système d'assainissement configuré pour être intégré et optimisé aérauliquement, constitué d'une pluralité de lampes UV (130) qui peuvent être extraites au moyen d'un moteur.

7. L'unité de ventilation (10) selon la revendication 1, où l'unité de ventilation (10) est équipée d'un système de Suppression Active du Bruit (ANC).
